# EUROPEAN PATENT APPLICATION

(11) **EP 4 223 636 A1**
(43) Date of publication of application: **09.08.2023**
(21) Application number: 20955476.5
(22) Date of filing: 29.09.2020
(51) Int. Cl.: B64C 29/00, B64C 15/12, B64C 15/00, B64C 1/00, B64C 3/00, B64C 3/10, B64C 11/00, B64D 27/00, B64D 35/00

(54) **VERTICAL-TAKE-OFF AERIAL VEHICLE WITH AEROFOIL-SHAPED INTEGRATED FUSELAGE AND WINGS**

(71) Applicant: Filho, Alberto Carlos Pereira, 12243-210 São José dos Campos (BR)
(72) Inventor: Filho, Alberto Carlos Pereira, 12243-210 São José dos Campos (BR)
(74) Representative: Benetazzo, Flavia
(86) International application number: PCT/BR2020/050388
(87) International publication number: WO 2022/067401

(57) **Abstract**

VERTICAL TAKE-OFF AIR VEHICLE WITH BLENDED AIRFOIL FUSELAGE AND WINGS, object of this application, essentially consists of a fixed-wing aircraft comprised of an airfoil-shaped fuselage (02) with four wings (10) shaped by the same airfoil. Accordingly, the fuselage has an aerodynamic wing behavior contributing to lift and minimizing drag of the aircraft, which provides greater payload and greater flight autonomy, in addition to good flight safety due to gliding during the horizontal flight. On each wing tip there is installed a thruster (35) (electric, ducted fan, turbojet/fan, or even a propeller) capable of turning, tilting longitudinally relative to the shaft of the aircraft, independently, by means of a rotary control system of the thrusters (35). This system is comprised of a driveshaft (34) installed on each wing and its corresponding electric motor (30). The thrusters (35) are all identical in performance, weight, and size, as a form of minimizing manufacturing costs, but the thrusters of the wings to the left rotate in a counter direction to those of the wings to the right to stabilize (neutralize) the wing tip vortex effect and torque due to the rotary moments caused by the rotary set of each thruster. A single control center commands both the rotation of the thrusters and the traction thereof, providing total control of the aircraft by vectoring and rotation, without the need to use control surfaces. The present model is innovative in its design generated from an airfoil that blends the entire fuselage and wings, presenting a hybrid behavior, as it performs the tasks of a VTOL vehicle, of a helicopter, as well as a conventional fixed-wing aircraft, being versatile in its abilities of vertical landing/take-off, gliding, vertical flight forwards and backwards, and horizontal flight with maximum economy.

## Description

### FIELD OF THE INVENTION

Over the years, aircraft manufacturers have given more preference to fixed wing monomotor or bimotor aircraft, being economical and less complex to manufacture and, therefore, having reduced operating costs.

Vertical take-off and landing vehicles are known as "vertical take-off and landing (VTOL)" machines, but having a relatively high power, generating high consumption, low velocity, and low flight autonomy.

In the VTOL category, the helicopter has dominated the market up to the present day, thanks to a series of advantages and opportunities dominating its evolutionary history. Even political issues of the aeronautical industry, as well as those of clients, cited the use of the helicopter as a short-range displacement instrument and vertical take-off and landing.

Therefore, the present invention refers to an innovative technology applied to aircraft, the fuselage configuration of which is blended with the wing (Blended Wing Body) and is from an airfoil model defined in the aerodynamic project of the aircraft and its flight conditions. The shape of the wings and also of the fuselage is based on a single configuration, taking the respective airfoil as its basis. Accordingly, the fuselage has a wing aerodynamic behavior contributing to lift and minimizing drag of the aircraft.

The configuration applied to the invention is of the four-motor type with a rotor system set at each tip of its four wings. Each set is longitudinally rotatable between the horizontal position and the vertical position and can be of the electric (ducted fan) type or jet turbo-thrusters and can be manned or unmanned.

Said thrusters may collectively or in isolation vary their traction, and also rotate, to change the flight speed and the movements of the aircraft: longitudinal, in pitch, directional, in yaw and lateral, in roll around the aircraft shaft system, enabling vertical take-off and landing, flotation (or gliding), as well as horizontal flight.

The thrusters, both the two front and the two rear ones have an independent or collective longitudinal turn capacity. This is important for flight control since the aircraft devised here does not have mobile surfaces of stability and control. The entire control of the aircraft is based on vectoring and turning the four thrusters, as explained ahead.

The present invention refers to an air vehicle with fixed wing, vertical take-off, and landing, manned or unmanned, that can execute various types of missions, including area monitoring, aerial photographic survey, agriculture, deliveries, and searches, etc.

It has characteristics of a hybrid vehicle, being endowed with VTOL resources, and can be piloted at a distance, characteristic of drones, and also allows horizontal flights, cruising, long-distance, flotation (hover), vertical take-off and landing. It has the characteristics of both VTOL dronetype aircraft, helicopter, and of fixed-wing aircraft which fly long distances due to the lift of the wings that minimize propulsion, basically requested to overcome drag at a given velocity.

It has a single structure blending the four wings to the fuselage, configured from an aeronautical airfoil established by the project, with the effect of optimizing the aerodynamic coefficients. In short, the aircraft has a versatile behavior: it can lift off and land vertically or horizontally on short runways for fuel saving, glide, fly slowly with thrusters on the vertical plane, or in the same conditions, make the flight backwards. Further, it can fly normally on the horizontal plane like a fixed-wing aircraft propelled by the traction of the four thrusters.

### STATE OF THE ART

Patent US 7159817 discloses a vertical take-off and landing (VTOL) aircraft with distributed thrust and control, presenting an aircraft with a vertical take-off and landing (VTOL) propulsion system. The aircraft includes the fuselage, VTOL propulsion system, at least one forward thruster, a power source used for the VTOL propulsion system and the forward thruster, fore and aft wings and a plurality of spars attached to and spanning the space between the two wings. The VTOL propulsion system includes a plurality of VTOL cells (including a motor, motor controller and propeller) attached in a spaced relation along each spar. The VTOL cells are used exclusively for vertical flight or hovering and are powered down as the aircraft develops forward flight velocity and corresponding wing lift. During forward flight the VTOL propellers are articulated to allow the aircraft to take on a low drag configuration. The present invention is suitable for use in manned or unmanned aircraft of any scale.

Patent US 7159817 B2 VTOL aircraft with three wings and six tiltable propulsion units presents a vertical take-off and landing aircraft with at least three wings and at least six propulsion units, each one of which is located radially stemming from two adjacent propulsion units, at identical or substantially identical angles. The at least six propulsion units together being located symmetrically, or in substantially symmetrical positions, around the approximate center of gravity of the aircraft, when seen from above. A vertical stabilizer may or may not be used. If no vertical stabilizer is used, the yaw control during the horizontal flight may be achieved by way of differential thrust using at least six propulsion units. The yaw control during the vertical flight can be provided by a plurality of yaw control panels. Should there be no yaw control panels, yaw control during the vertical flight can be provided using tilt angles of the differential propulsion unit.

### SHORTCOMINGS OF THE STATE OF THE ART

It is known that the major disadvantage of VTOL vehicles is that to fly horizontally, having no wings, they need a lot of power to keep themselves in the air, thus diminishing the range in this type of aircraft.

On the other hand, fixed-wing planes play this role, minimizing the consumption of fuel to maintain horizontal flight, but do not take-off or land vertically. Moreover the fuselage of these aircraft, oftentimes, contributes little in their performance during flight and is largely responsible for the drag produced.

Other proposals of VTOL aircraft with wings for horizontal flight have two sets of different thrusters, one for the VTOL function, and the other for the horizontal flight, which entails greater weight, cost, shorter flight autonomy and less payload capacity, since for most of the flight one of the propulsion systems will be idle, contributing solely to increase the weight of the aircraft.

Some proposals for VTOL aircrafts endowed with fixed wings, with capacity for horizontal flight, use conventional fuselages, commonly found in aviation, without exploiting the benefits of a fuselage in the shape of an aeronautical airfoil, which decreases drag and generates lift for the aircraft.

There are also proposals that present conventional control surfaces for aircraft maneuverability, which increases the cost, the weight, and the complexity of the aircraft, and further decreases the reliability thereof, due to the quantity of mobile parts.

### SOLUTION PROPOSED

Today, with the steps forward in manufacturing technology, better thrusters, batteries and improved electronic control system, VTOL-type vehicles, endowed with wings, with four-motor propulsion are increasingly attractive because they combine considerable advantages: capacity for vertical take-off and landing, gliding, backwards flight, greater horizontal velocity, and greater flight autonomy, when compared to wingless VTOL vehicles.

The present aircraft model satisfies the criteria that define technological innovation, bearing two main advantages of flight dynamics: VTOL take-off coupled with greater autonomy and velocity.

The aircraft now proposed is a new concept with a fuselage blended with the wings, designed in harmony from a flight airfoil, as we shall see throughout this document. This airfoil that defines the contours of the fuselage is chosen from the performance specification of the aircraft.

So, this is a hybrid aircraft with both characteristics, of flight of a helicopter and of a fixed-wing aircraft, that is, it is endowed with the capacity to fly making use of the aerial flotation generated by the four thrusters in vertical position or fly altering this condition to horizontal.

Having fixed wing, it flies by floating on the air generated by a difference in pressure formed between the upper surface and the lower surface thereof, generated by the airfoil. In this aerodynamic configuration, besides the wings contributing to increase the lift with minimum drag, also the very fuselage with the same profile, gives the proposed vehicle more advantages than the aerial vehicles of the category. Safety is another fundamental item, because in the present invention the high lift produced by the wings and the fuselage itself is a prominent item.

When the aircraft is on vertical take-off and landing, the rotor shaft is perpendicular to the surface of the ground, making the aircraft fly like a helicopter and perform all the characteristic maneuvers thereof.

Upon reaching a preset height and flight speed, the rotor shaft may be tilted forwards, assuming a horizontal condition, then the rotors become thrusters that drive the aircraft horizontally forwards. In this condition, of fixed wing and with thrusters in the horizontal position, the aircraft can fly at speed, reaching greater distances, as it requires less thrust from the thrusters since the lift, coupled with low drag, minimize strain.

Traditionally, aircraft have a fuselage defined from a cylinder or even a geometric shape similar thereto, an ellipsoid, for example, with its double wings (canard or fore and aft wing set) or simply delta (mono) wing. In the model proposed, the fuselage is generated from an aeronautical airfoil, suitable for making up with the wing an aerodynamic configuration capable of attending to horizontal flight, with less propulsion strain.

The center of the aircraft has as main line the airfoil defined in the project. This format will extend as far as the tip of the wings, so as to form a single body generated from a same airfoil. Moreover, due to the fact that the fuselage and wings are defined by an airfoil, drag is significantly minimized, which causes substantial economy in the consumption of fuel, during horizontal flight.

Being more robust, it can be submitted to more severe conditions, as it has no flight control mobile surfaces and thanks to its structural configuration it is able to glide - it is safer.

### BRIEF DESCRIPTION OF THE DRAWINGS OF THE DEVICE

In complement to the present description, so as to obtain a better understanding of the characteristics of the present invention and in accordance with a preferred embodiment thereof, the specification is accompanied by a set of drawings, where illustratively, though not limitatively, the following is represented:
Figure 1 - Shows a configuration of an aircraft model generated from an airfoil.
Figure 2 - Shows the aircraft with thrusters in vertical position.
Figure 3 - Shows the aircraft with thrusters in horizontal position.
Figure 4 - Shows details of the main components of the aircraft.
Figure 5 - Shows the schematic diagram of the drive system of the aircraft.
Figure 6 - Shows the schematic diagram of the control command system of the aircraft.
Figure 7 - Shows rotation direction of the thrusters.
Figure 8 - Shows an airfoil.
Figure 9 - Shows the aircraft with the thrusters in tilt position.

### DETAILED DESCRIPTION OF THE INVENTION

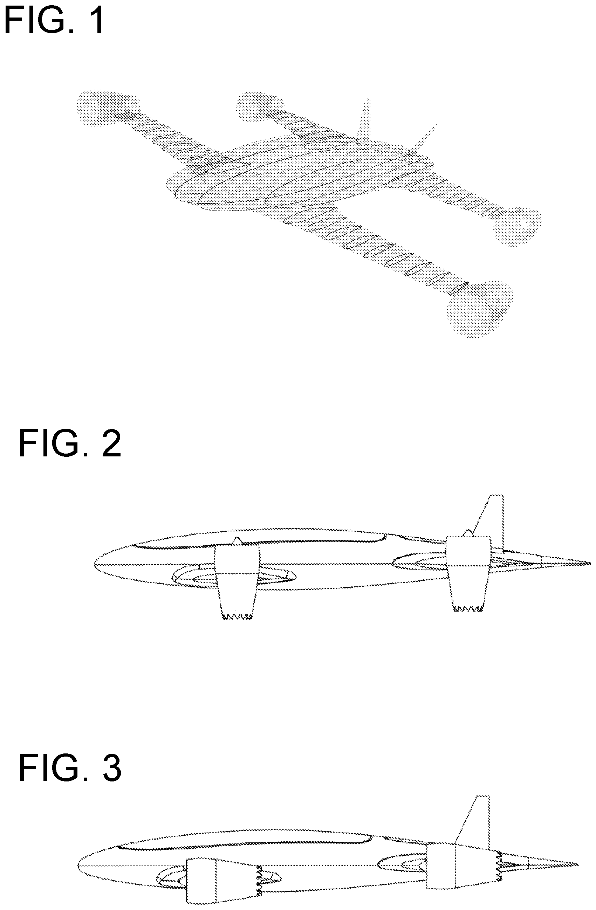

Thus, this is a hybrid air vehicle, as presented in figure 2, having vertical take-off and landing (VTOL), devised by way of fuselage (02) blended with fixed wings (10) and their respective thrusters (35), operable to raise or lower the air vehicle vertically, and can glide, do horizontal cruise flight and, thereafter, return to vertical flight to land vertically. Through its versatility, the vehicle may also take-off and land on short runways (STOL- Short Take-off and Landing). This option reduces the consumption of fuel during landing and take-off.

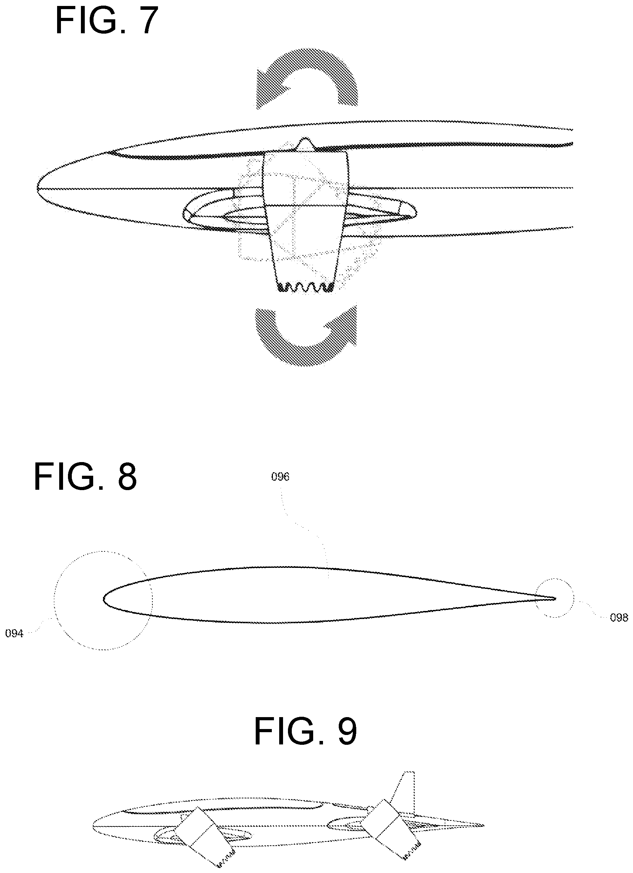

During vertical flight, the thrusters (35) are directed vertically for vertical take-off (figure 2). When in horizontal cruise flight, the air vehicle can use its thrusters (35) in a horizontal position (figure 3). It may also fly with thrusters (35) in vertical position or slightly tilted (figure 9) in a lowspeed glide flight.

The thrusters (35) are placed at the ends of the wings (10), the vehicle, which is devoid of control surfaces, rendering it more efficient aerodynamically minimizing drag.

The respective thrusters (35) are independently operable to develop joint or differential traction, using rotation and/or turn control, to enable maneuvers of pitch, yaw and roll and accelerations, as well as vertical displacement.

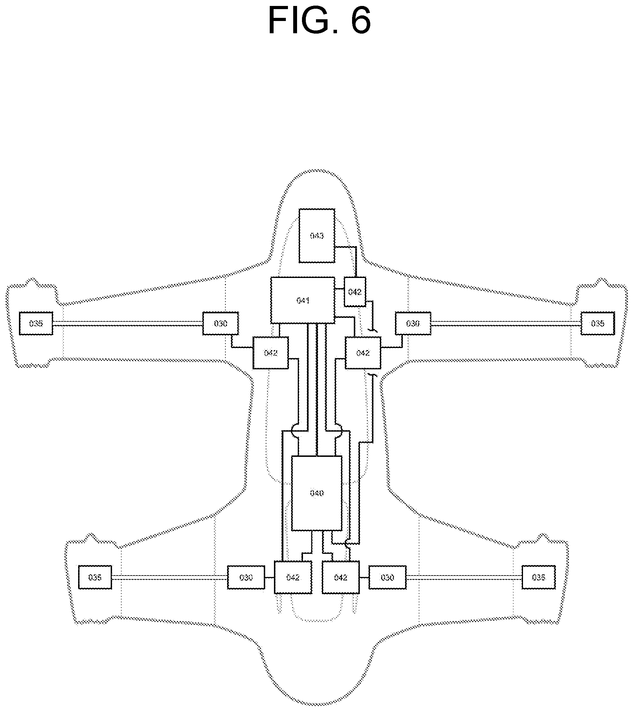

The patent presented herein of an air vehicle further consists of four subsystems comprising: fuselage (02) in the form of an aeronautical airfoil, according to figure 1, set of the wings (10), set of thrusters (35) and Flight Control Command System (41), figure 6.

The nose of the aircraft (01), front of the fuselage, is threedimensionally shaped, formed by the joint of the leading edges (94) of the airfoils that make up the fuselage; the tail (05), in turn, rear part of the fuselage, is defined by the thee-dimensional shape of the trailing edges (98) of these airfoils that make up the fuselage (02).

Inside the fuselage (02) there are installed four identical electric motors (30) for controlling the rotation of the thrusters (35), in addition to a battery (40) and other mechanisms and accessories needed for the flight of the aircraft.

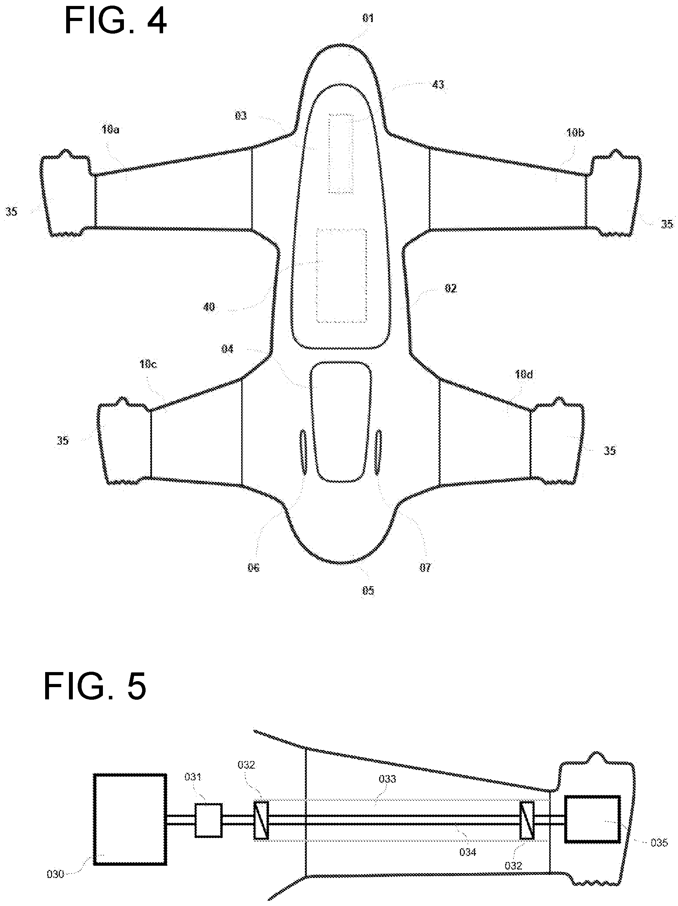

According to Figure 5, the set of fore wings (10a and 10b) installed on the left and right sides of the fuselage (02), a position defined from basic aerodynamic calculations. Further according to Figure 5, at the rear end of the fuselage (02), the aft wings (10c and 10d) are located, differing slightly from the conventional fixed-wing models due to the hybrid characteristic that requires a greater area of same so as to stabilize the aircraft in the two conditions VTOL and horizontal flight. Each one has its own thruster (35), and rotation torque drive system, respectively.

It also has two vertical stabilizers, (06) and (07), in the shape of fins on the upper part of the fuselage (02), for improved side stability in horizontal flights.

The internal structure houses four electric motors (30), one for each thruster (35), the drivers (42), whose function it is to command the rotary precision electric motors (30) of the thrusters (35), the set of batteries (40) or fuel tank (in the case of jet propulsion) and supplementary accessories.

The upper part has two covers: a smaller rear cover (04) for inspecting rear accessories and a larger forward cover (03) that serves for inspection of forward accessories and payload placement. Both covers can be operated easily. A landing gear system, composed of a forward landing gear and two rear landing gears, enables VTOL or STOL landing of the aircraft.

The present proposal consists of an air vehicle configured based on a fuselage (02) blended to fixed wings (10), forming a set of fore wings (10a and 10b) and a set of aft wings (10c and 10d), ending with a tail (05) finalized by the contour of the trailing edges (98) of the profiles that model the fuselage (02). These wings are made of resistant and light material, having their structure sized and manufactured conventionally and complying with flight project requirements.

The driveshaft (34) passes through the main spar (33) of each wing, enabling the rotation torque to be transmitted to the corresponding thruster (35), produced by the rotary precision electric motor (30) in each wing inside the fuselage (02). Each electric motor (30) is commanded independently by its respective driver (42) based on a response to the order from the Flight Control Command Center (41). The entire electric system is powered by the set of batteries (40).

The driveshaft (34) is responsible for transmitting precise rotary torque to its respective thrusters situated inside the spar (33) of each wing, so as to attend to the corresponding thruster (35) at the end of the wings, to the electric motor (30) located on the fuselage (02) of the aircraft.

This is a mechanism pivoted by the driveshaft (34) situated in the spar (33) of each wing and supported by bearings (32) that enable this rotation without generating strain by attrition. With this, the thrusters (35) are endowed with longitudinal rotary capacity for condition of change of attitude required for the type of flight defined by the flight command center (41). A coupling system (31) assures the connection of the driveshaft (34) to the corresponding electric motor (30).

The system thruster represented in figures 04, 05 and 06, shows a propulsion set comprised of four units of thrusters (35). To cancel the torque produced by the rotation thruster, for greater stability of the aircraft, the thrusters on the right operate by rotating in opposite directions to the thrusters on the left and with the aim of cancelling the aerodynamic effects of wing tip vortex. Adjustments in the rotation of each thruster (30), commanded by the Flight Control Command Center (41), producing desired traction that can be simultaneous or independent.

As demonstrated in Figure 02, during take-off and landing, the four thrusters (35) are in the vertical position, and all with a traction value defined by the Flight Control Command Center, corresponding to traction needed to overcome gravity (take-off) or be less (landing), or equal to the force of gravity - a necessary condition for gliding. The thrusters (35) can also execute reverse maneuvers, that is, can execute the aircraft flight backwards, with the position of the reactors at a turning angle greater than 90 degrees.

The Flight Control Command Center (41) commands the four electric motors (30) and the traction of the thrusters (35). The rotation control driven by the electric motors (30) can be independent, allowing individual positioning, two by two (right and left) or simultaneous of the thrusters (35) with precision, promoting stability and attitude, especially in roll. Moreover, the Flight Control Command Center (41) also controls the traction of the thrusters (35) individually or combined (two by two) or simultaneous, such that the aircraft can execute its maneuvers and programmed flights.

The Flight Control Command Center (41) of the aircraft is in charge of the entire command of take-off, landing, gliding and flight, comprising a navigation and control system, such as rotations and accelerometers, is responsible for accomplishing the mission and the flight stability of the aircraft, that is, by the velocity imprinted on the aircraft, by the execution of curves and by the stability of the vehicle at all times on the three coordinate axes: yaw, pitch and roll.

One particular aspect of the present invention is that there is no control command by surfaces, the wings are fixed without mobile control surfaces. This control operates by commanding the traction of the four thrusters (35), collectively or individually, and by commanding, independently, the individual or simultaneous position of rotation of these four thrusters (35). Accordingly, the controls of pitch, yaw and roll are provided during the vertical and horizontal flight by the traction and rotation position of each thruster, collectively or independently commanded by the Flight Control Command Center (41).

The air vehicle, disclosed in the present patent, can execute the most varied types of maneuvers. During the horizontal cruising flight, the Flight Control Command Center (41) positions the four thrusters (35) simultaneously, with traction and position horizontal, sufficiently, and efficiently to overcome aircraft drag to the required velocity.

It is certain that when the present invention is put into practice, modifications may be introduced relative to certain details of construction and shape, without implying straying from the underlying principles that are clearly substantiated in the set of claims, so it is understood that the purpose of the terminology used was descriptive as opposed to limitative.

## Claims

1. VERTICAL TAKE-OFF AIR VEHICLE WITH BLENDED AIRFOIL FUSELAGE AND WINGS the state of the art of which anticipates a vertical take-off and landing aircraft with four thrusters **characterized in that** its fuselage (02) is blended with fixed wings molded by generating the contours of a configuration defined by an aeronautical airfoil, or wing profile, with the fore (10a and 10b) and aft (10c and 10d) wings installed on the sides of the fuselage (02) and positioned in accordance with the conditions and essential characteristics of the project.

2. VERTICAL TAKE-OFF AIR VEHICLE WITH BLENDED AIRFOIL FUSELAGE AND WINGS the state of the art of which anticipates a vertical take-off and landing aircraft with four thrusters **characterized by** being a hybrid air vehicle with fuselage (02) molded from an aeronautical airfoil comprised of four fixed wings, with capacity for vertical take-off and landing (VTOL), or short take-off (STOL), capacity for gliding, vertical flight, forwards and backwards, and horizontal flight; by not having flight control aerodynamic mobile surfaces such as ailerons, elevator, rudder and flaps.

3. VERTICAL TAKE-OFF AIR VEHICLE WITH BLENDED AIRFOIL FUSELAGE AND WINGS the state of the art of which anticipates a vertical take-off and landing aircraft with four thrusters **characterized in that** its thrusters (35) can rotate, tilting independently and drive its thrust collectively or in isolation, enabling a change of attitude in pitch, direction, in yaw and side, in roll around aircraft shaft system, as well as vertical take-off and landing, flotation (or gliding) and horizontal flight.

4. VERTICAL TAKE-OFF AIR VEHICLE WITH BLENDED AIRFOIL FUSELAGE AND WINGS the state of the art of which anticipates a vertical take-off and landing aircraft with four thrusters **characterized by** not having flight control mobile surfaces having all its maneuvers carried out by the thrusters positioned at the end part of its wings.

5. VERTICAL TAKE-OFF AIR VEHICLE WITH BLENDED AIRFOIL FUSELAGE AND WINGS the state of the art of which anticipates a vertical take-off and landing aircraft with four thrusters **characterized by** turning in a contrary direction to the thrusters on the left to offset the torque effect produced by its rotation and by the wing tip vortex effect.

6. VERTICAL TAKE-OFF AIR VEHICLE WITH BLENDED AIRFOIL FUSELAGE AND WINGS the state of the art of which anticipates a vertical take-off and landing aircraft with four thrusters **characterized by** having four rotary precision electric motors (30) for directing and positioning the thrusters independently, each one connected to its corresponding thruster (35) by way of a driveshaft mechanism (34). Each rotary precision electric motor (30) has its corresponding driver (42) being commanded by a Flight Control Command Center (41).

7. VERTICAL TAKE-OFF AIR VEHICLE WITH BLENDED AIRFOIL FUSELAGE AND WINGS the state of the art of which anticipates a vertical take-off and landing aircraft with four thrusters **characterized by** having a landing gear set, as described, enabling vertical take-off and landing (VTOL) and also short take-off and landing (STOL).
